**Europäisches Patentamt**

**European Patent Office**

**Office européen des brevets**

(19)

(11) Numéro de publication: **0 043 330**
**B1**

(12) **FASCICULE DE BREVET EUROPEEN**

(45) Date de publication du fascicule du brevet: **19.09.84**

(51) Int. Cl.³: **G 01 N 21/90**

(21) Numéro de dépôt: **81401049.2**

(22) Date de dépôt: **30.06.81**

(54) **Système de référence pour le contrôle d'un liquide contenu dans un récipient transparent au mode de détection.**

(30) Priorité: **01.07.80 FR 8014621**

(43) Date de publication de la demande:
**06.01.82 Bulletin 82/01**

(45) Mention de la délivrance du brevet:
**19.09.84 Bulletin 84/38**

(84) Etats contractants désignés:
**DE NL SE**

(56) Documents cités:
**FR-A-2 045 580**
**FR-A-2 234 552**
**FR-A-2 350 597**

(73) Titulaire: **SOCIETE NATIONALE INDUSTRIELLE AEROSPATIALE**
**37 boulevard de Montmorency**
**F-75016 Paris Cedex 16 (FR)**

(73) Titulaire: **SANOFI**
**40, Avenue George V**
**F-75008 Paris (FR)**

(72) Inventeur: **Ometz, Pierre Henri Maurice**
**7 Villepreux Village**
**Saint-Aubin Medoc Gironde (FR)**
Inventeur: **Labrador, Jacques Alphonse Louis**
**24 rue du Jeu de Paume**
**Bordeaux-Cauderan Gironde (FR)**

(74) Mandataire: **Lepeudry-Gautherat, Thérèse et al**
**Cabinet Armengaud Jeune Casanova, Akerman, Lepeudry 23 boulevard de Strasbourg**
**F-75010 Paris (FR)**

EP 0 043 330 B1

Courier Press, Leamington Spa, England.

## Description

La présente invention se rapport d'une manière générale aux systèmes de contrôle non destructif et plus particulièrement aux systèmes de détection de corps étrangers, notamment solides, ou défauts existant dans un liquide contenu dans un récipient transparent au mode de détection, le contrôle pouvant être effectué même après fermeture définitive dudit récipient en vue de sa commercialisation.

L'invention a pour objet, dans la perspective de ce contrôle, un système de référence stable et reproductible utilisé pour la détection desdits défauts. Il se compose d'un jeu de récipients pouvant être analogues aux récipients commercialisés.

Plus précisément, l'objet de l'invention réside dans un système de référence pour le contrôle non destructif et la détection de défauts, p.ex. de corps étrangers de nature différente, dans un liquide à contrôler contenu dans un récipient transparent au mode de détection choisi qui est constitué par un jeu de récipients-étalons identiques contenant tous un même liquide, ce dernier présentant au moins des caractéristiques équivalents à celles du liquid à contrôler, par rapport au mode de détection choisi, chaque récipient-étalon contenant un seul défaut artificiel connu, stable, reproductible et capable d'engendrer un signal dans le système de détection utilisé, l'importance du défaut artificiel variant d'un récipient à l'autre.

Le ou les jeux de récipients -étalons ainsi réalisés peuvent servir à régler la sensibilité des appareils automatiques de contrôle, à contrôler périodiquement la constance de la sensibilité desdits appareils et à établir l'équivalence de défauts réels avec les défauts-étalons. Dans ces utilisations, on obtient selon l'invention, pour le contrôle automatique, une précision et un gain de temps importants par rapport aux méthodes statistiques souvent utilisées jusqu'à présent.

Le système de référence selon l'invention peut être également utilisé pour la formation du personnel exécutant un contrôle visuel et comme seuil de référence pour le contrôle visuel. Pour ces deux utilisations, on améliore ainsi de manière sensible la qualité dudit contrôle visuel.

Le système de référence selon l'invention peut plus particulièrement être utilisé pour le contrôle des produits pharmaceutiques et spécialement des ampoules de produits injectables.

Ainsi, des pharmacopées exigent que les liquides injectables présentés en ampoules soient soumis à des contrôles rigoureux. L'un d'eux a pour objet de détecter, après scellement des ampoules, la présence de défauts de nature, de forme et de taille très diverses: filaments textiles (provenant des vêtements, des filtres de l'atmosphère, etc.), particules granulaires, particules de verre, particules provenant de la cristiallisation, poussières, etc.

Le but de cette détection est d'éliminer toutes les ampoules contenant des défauts visibles à l'oeil nu, par exemple des grains, en estimant que ceux-ci sont d'au moins 50 micromètres. C'est une méthode empirique car la détection de certains défauts dépend de l'acuité visuelle de l'observateur, du type d'éclairage et de son intensité, ainsi que de la forme et de la nature du défaut.

On connaît des appareils automatiques de détection des défauts dans des corps transparents par voie photoélectrique, c'est ainsi que le document FR—A—2.350.597 décrit un dispositif semblable pour le contrôle des récipients vides dans lequel on effectue un réglage du seuil de sensibilité à partir d'un récipient modèle qui ne présente que des défauts admissibles de manière à priver d'effet dans le contrôle systématique apéré après ce réglage les signaux de détection correspondant à ces défauts admissibles. Le récipient modèle est choisi parmi les récipients issus de la ligne de production en fonction de critères conduisant à son admissibilité. Ce dispositif a pour but d'éviter un trop grand nombre de rebut, mais ne permet pas d'obtenir d'informations précises quant à la taille du défaut détecté. En outre, par le choix même du modèle, il introduit une certaine relativité dans les critères de rejet. On voit donc que ce système ne permet pas d'établir une équivalence directe entre le défaut détecté et sa taille réelle, sauf par des méthodes statistiques longues, imprécises et arbitraires. Ces méthodes sont non seulement coûteuses mais trop éloignées des critères de précision et de reproductibilité que l'on est en droit d'exiger d'une méthode d'étalonnage applicable aux contrôles des fabrications pharmaceutiques.

Il est donc apparu nécessaire de créer un système d'étalonnage des appareils tels que ceux mentionnés ci-dessus en vue d'obtenir un contrôle de très bonne qualité. Il est également apparu nécessaire de créer des moyens de référence pour le personnel chargé du contrôle visuel.

La présente invention a donc pour but:

— de pallier les inconvénients de la technique antérieure,

— d'améliorer le contrôle des liquides contenus dans les récipients transparents au mode de détection choisi,

— de réduire le coût des contrôles, spécialement de l'étalonnage des appareils de contrôle et de leur fidélité,

— d'uniformiser la sévérité des critères de rejet, dans le cas du contrôle visuel, en fonction du temps et des opérateurs.

Ces buts sont atteints grâce à un système de référence constitué par un jeu de récipients-étalons identiques contenant tous le même liquide et chacun un seul défaut artificiel connu, stable, reproductible et capable d'engendrer un signal dans le système de détection utilisé, l'importance du défaut variant d'un récipient à l'autre.

Tous les récipients du même jeu sont identiques et, bien entendu, transparents au mode de détection choisi. Ils contiennent tous le même liquide, mais chacun un seul défaut artificiel bien défini, stable et reproductible, l'importance dudit défaut variant d'un récipient à l'autre.

Le liquide contenu peut être identique au liquide à contrôler ou, plus simplement, présenter des caractéristiques équivalentes à celles de ce dernier, par rapport au mode de détection choisi.

Le défaut peut être constitué, par exemple, par une bille de verre, de métal, de plastique ou de toute autre matière. Ce défaut peut être également constitué par un cristal dont la croissance ou la taille a été stoppée aux dimensions voulues. L'essentiel est que ledit défaut soit défini, reproductible et stable, c'est-à-dire de matière, forme, état de surface et dimensions connues et inaltérables.

Le type et les dimensions des défauts-étalons seront choisis en fonction des défauts réellement rencontrés et du système de détection qui pourra être, par exemple, optique, photoélectrique, électromagnétique, par rayonnement X ou gamme.

Les dimensions des défauts varient d'un récipient de référence à l'autre, par exemple selon une progression arithmétique ou géométrique, de manière à couvrir toute la gamme de défauts décalables à l'oeil ou détectables par une machine. Lorsqu'on utilise des billes calibrées, on trie au préalable ces dernières de manière connue, par exemple par tamisage. On crée de cette façon des jeux de récipients de référence convenant à chaque type de contrôle et à chaque machine.

Pour le contrôle visuel, on peut concevoir un jeu de récipients de référence dont les défauts vont du plus petit défaut décalable par un oeil exercé jusqu'au défaut qui sera toujours détecté sans aucun problème. Il est évident que la dimension des défauts extrêmes est également établie en fonction des conditions d'utilisation du poste de contrôle visuel et en fonction des impératifs inhérents audit contrôle, par exemple en fonction des exigences des pharmacopées lorsqu'il s'agit du contrôle de produits pharmaceutiques.

Les récipients de référence sont, au départ, des récipients choisis par exemple de manière à être identiques ou proches des récipients à contrôler. Ils subissent un traitement spécial pour être exempts de tout autre défaut nuisible.

Ces récipients de référence seront réputés ne contenir qu'un défaut étalon dès lors que les autres impuretés éventuelles présenteront une taille apparente négligeable par rapport à ce défaut étalon.

Dans le cas des contrôles pharmaceutiques, l'invention a plus particulièrement pour objet un système de référence consistant en un jeu d'ampoules répondant aux caractéristiques définies ci-dessus. Dans ce cas, les ampoules-étalons sont, au départ, de préférence des ampoules pharmaceutiques choisies de manières à être identiques ou proches des ampoules qui seront contrôlées.

A titre d'exemple pratique, on a réalisé selon l'invention, un jeu d'ampoules-étalons de 2 ml remplies d'eau de qualité pharmaceutique et contenant chacune une bille de verre dont le diamètre s'échelonne de 30 à 200 micromètres. Ce jeu d'ampoules a donné toutes satisfactions sur un appareil de détection de la marque déposée STRUNCK et sur un autre appareil type APM de la marque déposée ROTA.

Les systèmes de référence selon l'invention peuvent être adaptés aux divers domaines dans lesquels ils peuvent être utilisés, notamment le contrôle des produits pharmaceutiques, mais aussi le contrôle des produits de la chimie fine, en particulier des réactifs chimiques.

**Revendications**

1. Système de référence pour le contrôle non destructif et la détection de défauts, p.ex. de corps étrangers de nature différente, dans un liquide à contrôler contenu dans un récipient transparent au mode de détection choisi, caractérisé en ce qu'il est constitué par un jeu de récipients-étalons identiques contenant tous un même liquide, ce dernier présentant au moins des caractéristiques équivalents à celles du liquide à contrôler, par rapport au mode de détection choisi, chaque récipient-étalon contenant un seaul défaut artificiel connu, stable, reproductible et capable d'engendrer un signal dans le système de détection utilisé, l'importance du défaut artificiel variant d'un récipient à l'autre.

2. Système selon la revendication 1, caractérisé en ce que le liquide contenu dans les récipients-étalons est identique au liquide à contrôler.

3. Système selon l'une quelconque des revendications 1 et 2, caractérisé en ce que le défaut artificiel est constitué par un cristal dont la croissance ou la taille a été arrêtée aux dimensions désirées.

4. Système selon l'une quelconque des revendications 1 et 2, caractérisé en ce que le défaut artificiel est constitué par une petite bille dont le diamètre est connu et varie d'un récipient à l'autre.

5. Système selon la revendication 4, caractérisé en ce que la bille est en verre.

6. Système selon la revendication 4, caractérisé en ce que la bille est en métal.

7. Système selon la revendication 4, caractérisé en ce que la bille est en matière plastique.

8. Système selon l'une quelconque des revendications 1 à 7, caractérisé en ce que les récipients-étalons sont constitués par des ampoules pharamceutiques fermées identiques ou analogues au récipient contenant le liquide à contrôler.

## Patentansprüche

1. Standarisierungssystem zur unzerstörbaren Kontrolle und zum Anzeigen von Fehlern, z.B. Fremdkörper unterschiedlicher Natur, in einer Kontrollflüssigkeit, die in einem durchsichtigen Behälter für die gewählte Nachweismethode enthalten ist, dadurch gekennzeichnet, daß es aus einem Satz von gleichen Eichbehältern besteht, die alle eine gleiche Flüssigkeit enthalten, letztere hat zumindest gleichwertige technische Daten wie die Kontrollflüssigkeit, mit Rücksicht auf die gewählte Nachweismethode; jeder Eichbehälter enthält einen einzigen künstlichen Fehler, der bekannt, stabil und reproduzierbar ist und der ein Signal in dem benutzten Nachweissystem erzeugen kann, wobei die Bedeutung des künstlichen Fehlers von einem zum anderen Behälter variiert.

2. Ein System nach Anspruch 1, dadurch gekennzeichnet, daß die Flüssigkeit, die in den Eichbehältern enthalten ist, identisch ist mit der Kontrollflüssigkeit.

3. Ein System nach Anspruch 1 oder 2, dadurch gekennzeichnet, daß der künstliche Fehler aus einem Kristall besteht, dessen Wachstum oder Größe bei gewünschten Dimensionen angehalten wurde.

4. Ein System nach Anspruch 1 oder 2, dadurch gekennzeichnet, daß der künstliche Fehler aus einem kleinen Kügelchen besteht, dessen Durchmesser bekannt ist und von einem zum anderen Behälter variiert.

5. Ein System nach Anspruch 4, dadurch gekennzeichnet, daß das Kügelchen aus Glas besteht.

6. Ein System nach Anspruch 4, dadurch gekennzeichnet, daß das Kügelchen aus Metall besteht.

7. Ein System nach Anspruch 4, dadurch gekennzeichnet, daß das Kügelchen aus Plastik besteht.

8. Ein System nach einem der Ansprüche 1 bis 7, dadurch gekennzeichnet, daß die Eichbehälter von geschlossenen pharmazeutischen Ampullen gebildet werden, identische oder analog zu dem Behälter, der die Flüssigkeit enthält.

## Claims

1. Reference system for the non-destructive monitoring and detection of defects, for example of foreign bodies of different nature, in a liquid to be monitored contained in a recipient transparent to the mode of detection chosen, characterized in that it is constituted by a set of identical standard recipients all containing the same liquid, this latter presenting at least characteristics equivalent to those of the liquid to be monitored, with respect to the mode of detection chosen, each standard recipient containing one sole known artificial defect, which is stable, reproducible and capable of generating a signal in the detection system used, the importance of the artificial defect varying from one recipient to the other.

2. System according to Claim 1, characterized in that the liquid contained in the standard recipients is identical to the liquid to be monitored.

3. System according to either one of Claims 1 and 2, characterized in that the artificial defect is constituted by a crystal whose growth or cut has been stopped at the desired dimensions.

4. System according to either one of Claims 1 and 2, characterized in that the artificial defect is constituted by a small ball whose diameter is known and varies from one recipient to the other.

5. System according to Claim 4, characterized in that the ball is made of glass.

6. System according to Claim 4, characterized in that the ball is made of metal.

7. System according to Claim 4, characterized in that the ball is made of plastics material.

8. System according to any one of Claims 1 to 7, characterized in that the standard recipients are constituted by closed pharmaceutical ampoules identical or similar to the recipient containing the liquid to be monitored.